# EUROPÄISCHE PATENTSCHRIFT

(11) **EP 1 990 114 B1**
(45) Veröffentlichungstag und Bekanntmachung des Hinweises auf die Patenterteilung: **23.09.2009**
(21) Anmeldenummer: 08002498.7
(22) Anmeldetag: 12.02.2008
(51) Int. Cl.: B23D 45/06, B23D 47/12, B23Q 11/00, B27B 5/18

(54) **Plattenbearbeitungsanlage**
Panel machining device
Installation d'usinage de plaques

(30) Priorität: 07.05.2007 DE 102007021838
(43) Veröffentlichungstag der Anmeldung: 12.11.2008
(73) Patentinhaber: HOLZMA Plattenaufteiltechnik GmbH, 75365 Calw-Holzbronn (DE)
(72) Erfinder: Blaich, Markus, 75365 Calw-Stammheim (DE); Krumrey, Alexander, 71131 Jettingen (DE)
(74) Vertreter: Knapp, Thomas

(56) Entgegenhaltungen:
- EP-A- 1 375 062
- WO-A-20/06064369
- DE-U1- 8 631 960

## Beschreibung

Die Erfindung betrifft eine Plattenbearbeitungsanlage nach dem Oberbegriff des Anspruchs 1 (siehe z.B. WO-A-2006/064369).

Vom Markt her bekannt ist eine Plattenbearbeitungsanlage, die als Werkzeug eine Säge umfasst. Ein Sägewagen ist quer zu einer Vorschubrichtung der zu bearbeitenden Platten verfahrbar angeordnet. An dem Sägewagen ist wiederum ein Schlitten vertikal verfahrbar gehalten, an dem ein Sägeblatt drehbar befestigt ist. Durch die vertikale Verfahrbarkeit des Schlittens kann das Sägeblatt in die Vorschubebene der Platten hinein und aus dieser wieder heraus bewegt werden. Mittels eines Riementriebs ist das Sägeblatt mit einem Antriebsmotor verbunden, der ebenfalls an dem Schlitten befestigt ist.

Aufgabe der vorliegenden Erfindung ist es, eine Plattenbearbeitungsanlage zu schaffen, die präzise arbeitet und eine große Schnitthöhe bei niedriger Bauhöhe aufweist.

Diese Aufgabe wird erfindungsgemäß durch eine Plattenbearbeitungsanlage mit den Merkmalen des Anspruchs 1 gelöst. Vorteilhafte Weiterbildungen der Erfindung sind in Unteransprüchen angegeben.

Bei der erfindungsgemäßen Plattenbearbeitungsanlage ist der Antriebsmotor, der ein vergleichsweise hohes Gewicht aufweist, zwar mit dem Schlitten über die Schwinge in einer festen Entfernung verbunden, sein Gewicht wird jedoch zumindest auch mittels des Gelenkarms vom Basisteil getragen. Bei einer vertikalen Aufwärtsbewegung des Schlittens ist daher nur noch eine vergleichsweise geringe Kraft erforderlich, so dass der entsprechende Aktor, der den Schlitten relativ zum Basisteil bewegt, kleiner ausfallen kann. Darüber hinaus kann die Bewegung schneller erfolgen, da die zu überwindende Massenträgheit geringer ist. Außerdem ist ein auf den Schlitten aufgrund der Gewichtskraft des Antriebsmotors und seiner Masse einwirkendes Kippmoment geringer, was den Einsatz einfacherer Linearlager ermöglicht und Veränderungen der Position des Werkzeugs reduziert. Dies reduziert Kosten und führt zu einem präziseren Bearbeitungsergebnis. Aufgrund der erfindungsgemäß vorgesehenen Schwinge kann darüber hinaus der Antriebsmotor an einer Stirnseite des Schlittens angeordnet werden, wodurch die Bauhöhe des Werkzeugwagens reduziert wird. Damit kann die Höhe einer Bearbeitungsebene der Plattenbearbeitungsanlage reduziert werden, was die Bedienung der Anlage durch eine Bedienperson, beispielsweise das Entnehmen und Handhaben bearbeiteter Werkstücke, erleichtert.

In einer ersten Weiterbildung der erfindungsgemäßen Plattenbearbeitungsanlage wird vorgeschlagen, dass die Schwinge einen mit ihr starr verbundenen Befestigungsarm aufweist, an dem der Gelenkarm angreift. Hierdurch wird die Masse der Schwinge reduziert, was die oben verzeichneten Vorteile nochmals verstärkt.

Bei dem Werkzeug handelt es sich vorzugsweise um ein Sägeblatt, bei der entsprechenden Plattenbearbeitungsanlage also um eine Plattenaufteilsäge. Möglich ist aber auch, dass das Werkzeug eine Frässcheibe oder einen Bohrer umfasst.

Ferner wird vorgeschlagen, dass das Getriebeelement einen Riemen, vorzugsweise einen Zahnriemen, umfasst, und dass die Drehachse einer Umlenkrolle des Riemens am Schlitten mit der Gelenkachse der Schwinge am Schlitten koaxial ist. Dies gestattet die Realisierung einer einfachen, gewichtsminimalen und die Spannung des Riemens nicht beeinflussenden Konstruktion.

Der Gelenkarm kann auf der anderen Seite des Werkzeugwagens als die Schwinge angeordnet sein. Dies ermöglicht eine Reduzierung des auf den Werkzeugwagen einwirkenden Kippmoments.

In die gleiche Richtung zielt jene erfindungsgemäße Weiterbildung, bei welcher der Schwerpunkt der aus Antriebsmotor und Schwinge gebildeten Einheit wenigstens in etwa in einer Mittelebene des Werkzeugwagens liegt.

Besonders vorteilhaft ist es, wenn eine Schwenkachse des Gelenkarms an der Schwinge zwischen einer gedachten vertikalen Linie, die durch den Schwerpunkt der durch die Schwinge und den Antriebsmotor gebildeten Einheit geht, und einer gedachten vertikalen Linie, die durch die Schwenkachse der Schwinge am Schlitten geht, liegt. Dies führt letztlich dazu, dass eine Aufwärtsbewegung des Schlittens durch die Gewichtskraft der aus Antriebsmotor und Schwinge gebildeten Einheit unterstützt wird, wodurch ein nochmals kleinerer Aktor zur Bewegung des Schlittens eingesetzt werden kann.

Vorzugsweise ist die Position der Gelenkachse des Gelenkarms am Basisteil so gewählt, dass die Bewegung des Antriebsmotors bei einer Verfahrbewegung des Schlittens minimal ist. Der Einfluss der Massenträgheitskräfte des Antriebsmotors auf die Bewegung des Schlittens werden hierdurch nochmals reduziert.

Besonders günstig ist eine Positionierung der Gelenksachse des Gelenkarms derart, dass bei einer Aufwärtsbewegung des Schlittens der Antriebsmotor eine Polkurve beschreibt, die sich im Wesentlichen aus zwei ungefähr linearen Bewegungen zusammensetzt, wobei die erste Bewegung nach außen und unten und die zweite Bewegung im Wesentlichen horizontal und nach innen verläuft. Es versteht sich jedoch, dass sich bei anderen Geometrien eine andere Polkurve als günstig erweisen kann.

Nachfolgend wird eine Ausführungsform der vorliegenden Erfindung unter Bezugnahme auf die beiliegende Zeichnung erläutert. In der Zeichnung zeigen:
- Figur 1: eine schematische perspektivische Darstellung einer Plattenbearbeitungsanlage mit einem Werkzeugwagen;
- Figur 2: eine detaillierte perspektivische Darstellung des Werkzeugwagens von Figur 1;
- Figur 3: eine teilweise transparente Seitenansicht des Werkzeugwagens von Figur 1;
- Figur 4: eine schematisierte Darstellung ähnlich Figur 3, mit einem Schlitten des Werkzeugwagens in einer unteren Position;
- Figur 5: eine Darstellung ähnlich Figur 4, mit dem Schlitten in einer mittleren Position; und
- Figur 6: eine Darstellung ähnlich Figur 4 mit dem Schlitten in einer oberen Position.

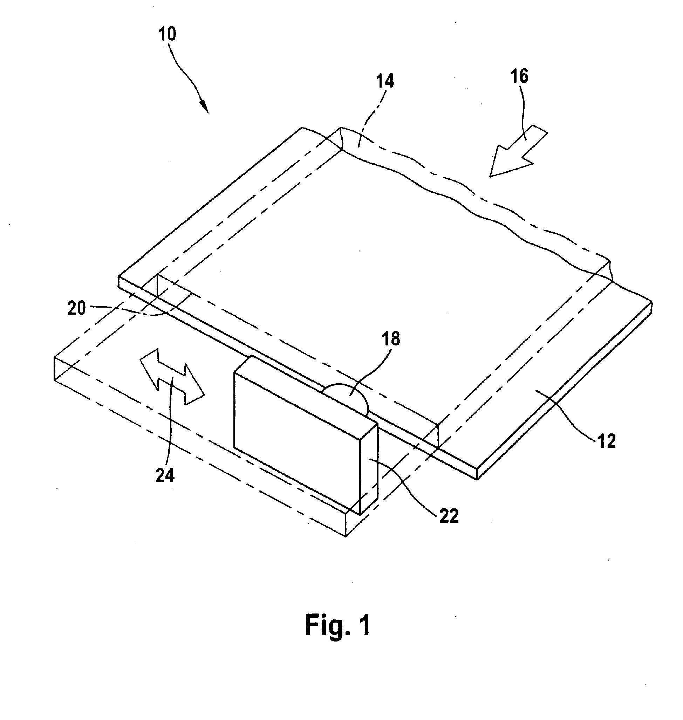

Eine Plattenbearbeitungsanlage trägt in Figur 1 insgesamt das Bezugszeichen 10. Sie umfasst einen Auflagetisch 12, auf dem ein Stapel 14 mit plattenförmigen Werkstücken in Vorschubrichtung 16 bis über ein Werkzeug 18 bewegt werden kann. Letzteres ist in der vorliegend gezeigten Ausführungsform als Sägeblatt ausgebildet, mit dem der Stapel 14 mit den plattenförmigen Werkstücken in einer Trennebene 20 aufgeteilt werden kann. Hierzu ist das Sägeblatt 18 an einem Werkzeugwagen 22 angebracht, der insoweit nachfolgend als Sägewagen bezeichnet werden wird.

Der Werkzeugwagen 22 kann parallel zur Trennebene 20 in Richtung des Doppelpfeils 24 bewegt werden, wodurch er bei drehendem Sägeblatt 18 den Stapel 14 in zwei voneinander getrennte Teilstapel auftrennt. Nach der Sägebewegung des Werkzeugwagens 22 wird dieser in entgegengesetzter Richtung wieder zurückgefahren, wobei hierzu das Sägeblatt 18 nach unten in eine Position unterhalb der Ebene des Auflagetisches 12 gefahren wird, damit währenddessen der Reststapel mit plattenförmigen Werkstücken wieder entlang der Vorschubrichtung 16 weiterbewegt werden kann.

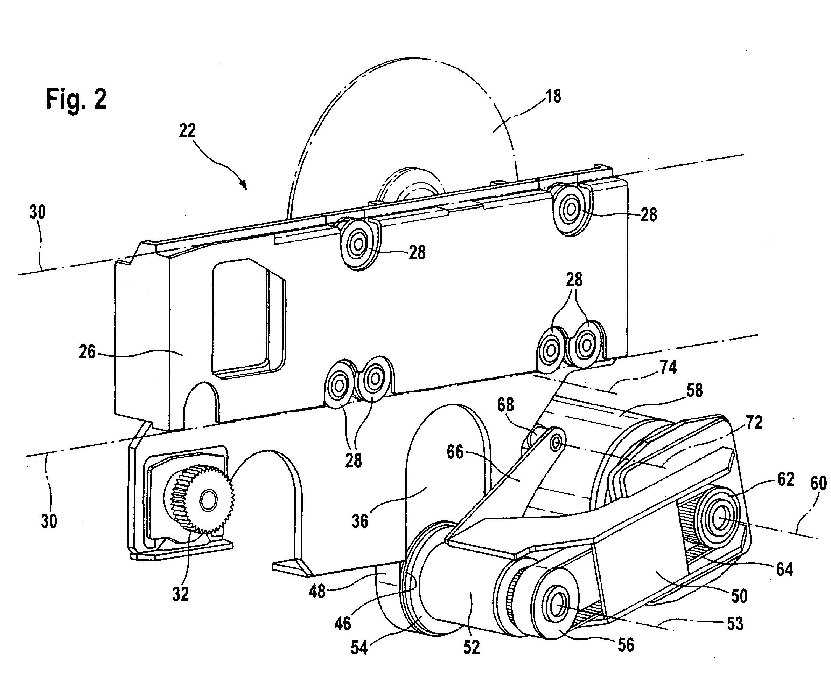

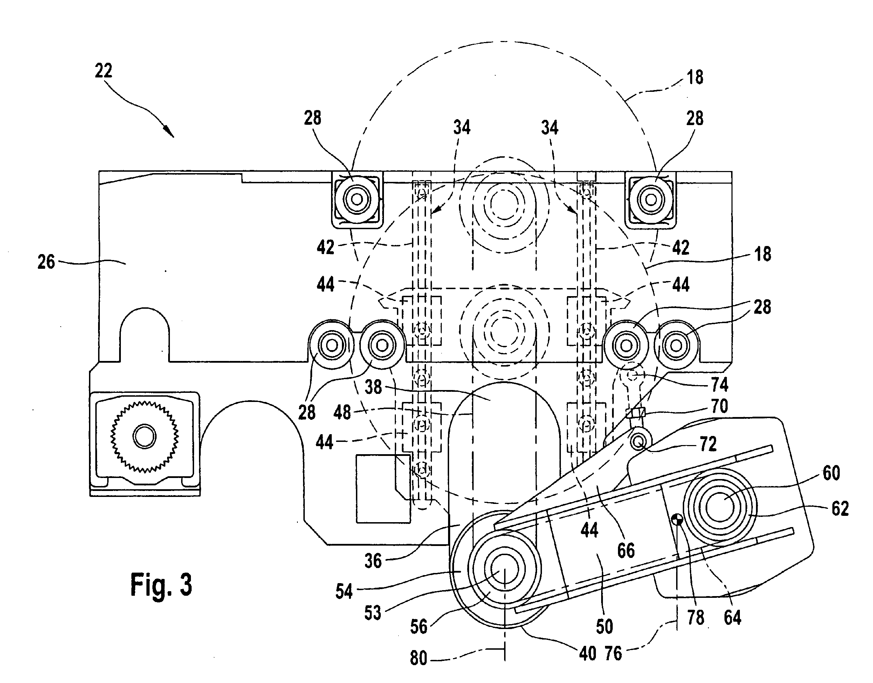

Der Aufbau des Sägewagens 22 wird nun im Einzelnen unter Bezugnahme auf die Figuren 2 und 3 erläutert: Danach umfasst der Sägewagen 22 zunächst ein plattenartiges Basisteil 26, welches mittels Rollen 28 zwischen anlagenfesten Schienen (in Figur 2 durch strichpunktierte Linien angedeutet und mit dem Bezugszeichen 30 versehen) in Richtung des Doppelpfeils 24 verfahrbar gehalten ist. Die Verfahrbewegung wird durch ein Ritzel 32 bewirkt, welches von einem nicht dargestellten Elektromotor angetrieben wird und mit einer anlagenfesten Zahnschiene (ebenfalls nicht dargestellt) kämmt.

An dem Basisteil 26 ist über Linearführungen 34 (vergleiche Figur 3) ein Schlitten 36 vertikal verfahrbar gehalten. Der Schlitten 36 ist ebenfalls plattenartig ausgebildet mit einem insgesamt in etwa viereckigen Grundabschnitt 38 und einem von diesem nach unten abragenden Halteabschnitt 40. Die Linearführungen 34 umfassen in bekannter Weise zwei vertikale und am Basisteil 26 montierte Schienen 42, die jeweils mit zwei mit dem Schlitten 36 verbundenen Halteteilen 44 zusammenarbeiten.

Das Sägeblatt 18 ist drehbar an einem oberen Bereich des Schlittens 36 befestigt. Am unteren Ende des Halteabschnitts 40 ist eine erste Umlenkrolle 46 drehbar befestigt, die über einen ersten Zahnriemen 48 mit einer Welle (ohne Bezugszeichen) verbunden ist, an der wiederum das Sägeblatt 18 befestigt ist.

An dem Schlitten 36 ist eine Schwinge 50 gelenkig befestigt. Letztere hat in der Draufsicht eine S-Form und einen kastenartigen Aufbau. Das zum Schlitten 36 gehörende Ende der Schwinge 50 wird durch eine Hülse 52 gebildet, deren Längsachse 53 koaxial zur Drehachse der ersten Umlenkrolle 46 ist. An das dem Schlitten 36 zugewandte Ende der Hülse 52 ist ein Flansch 54 angeformt, der um die Längsachse der Hülse 52 drehbar am Schlitten 36 gehalten ist. Die Hülse 52 wird von einer nicht sichtbaren Welle durchsetzt, die die erste Umlenkrolle 46 mit einer zweiten Umlenkrolle 56 verbindet.

Am vom Schlitten 36 abgewandten Ende der Schwinge 50 ist an dieser ein Antriebsmotor 58 befestigt, dessen Längsachse 60 parallel zur Längsachse 53 verläuft. Zwischen einem Antriebsritzel 62 des Antriebsmotors 58 und der zweiten Umlenkrolle 56 ist ein zweiter Zahnriemen 64 gespannt. Das Sägeblatt 18 wird also vom Antriebsmotor 58 über das Antriebsritzel 62, den zweiten Zahnriemen 64, die zweite Umlenkrolle 56, die nicht sichtbare in der Hülse 52 verlaufende Welle, die erste Umlenkrolle 46 und den ersten Zahnriemen 48 angetrieben.

Die beiden Zahnriemen 48 und 64 können insoweit auch als Getriebeelemente bezeichnet werden, welche den Antriebsmotor 58 mit dem Sägeblatt 18 koppeln. Man erkennt insbesondere aus Figur 3, dass der zweite Zahnriemen 64 insgesamt längs der Schwinge 50 verläuft. Die Schwinge 50 mit dem Antriebsmotor 58 ist dabei um die Längsachse 53 verschwenkbar, ohne dass hierdurch die Spannung der beiden Zahnriemen 48 und 64 beeinflusst wird.

Die Schwinge 50 umfasst einen mit ihr starr verbundenen Befestigungsarm 66. Dieser ist an einem Ende mit der Hülse 52 und dem Flansch 54 starr verbunden und erstreckt sich mit seinem abragenden Ende bis zu einer Stelle, die oberhalb der Schwinge 50 und, wie aus Figur 3 ersichtlich ist, von deren Mitte aus gesehen etwas weiter zum Antriebsmotor 58 hin gelegen ist. An dem Befestigungsarm 66 ist eine Distanzhülse 68 befestigt, die sich über eine gedachte und in der Zeichnung nicht dargestellte Mittelebene des Basisteils 26 hinweg bis auf die von der Schwinge 50 abgewandte Seite des Basisteils 26 hin erstreckt. Das Ende der Distanzhülse 68 ist wiederum mit einem Ende eines Gelenkarms 70 gelenkig verbunden, der wiederum am Basisteil 26, und zwar auf dessen Seite, auf der auch der Schlitten 36 und das Sägeblatt 18 angeordnet sind, gelenkig befestigt ist. Eine zur Distanzhülse 68 beziehungsweise dem Ende des Befestigungsarms 66 koaxiale Schwenkachse ist in Figur 2 mit 72 bezeichnet, eine Schwenkachse zwischen Gelenkarm 70 und Basisteil 26 mit 74.

Man erkennt aus Figur 2, dass sich der Antriebsmotor 58 ebenfalls über die Mittelebene des Sägewagens 22 hinweg auf dessen andere, von der Schwinge 50 abgewandte Seite hin erstreckt. Durch die S-Form der Schwinge 50 wird dabei erreicht, dass der Schwerpunkt der aus Antriebsmotor 58 und Schwinge 50 gebildeten Einheit wenigstens in etwa in der besagten Mittelebene des Werkzeugwagens 22 liegt.

Aus Figur 3 wiederum erkennt man, dass die Schwenkachse 72 des Gelenkarms 70 an dem zur Schwinge 50 gehörenden Befestigungsarm 66 zwischen einer gedachten vertikalen Linie 76, die durch den Schwerpunkt 78 der durch die Schwinge 50 und den Antriebsmotor 58 gebildeten Einheit geht, und einer gedachten vertikalen Linie 80, die durch die Schwenkachse 53 der Schwinge 50 am Schlitten 36 geht, liegt.

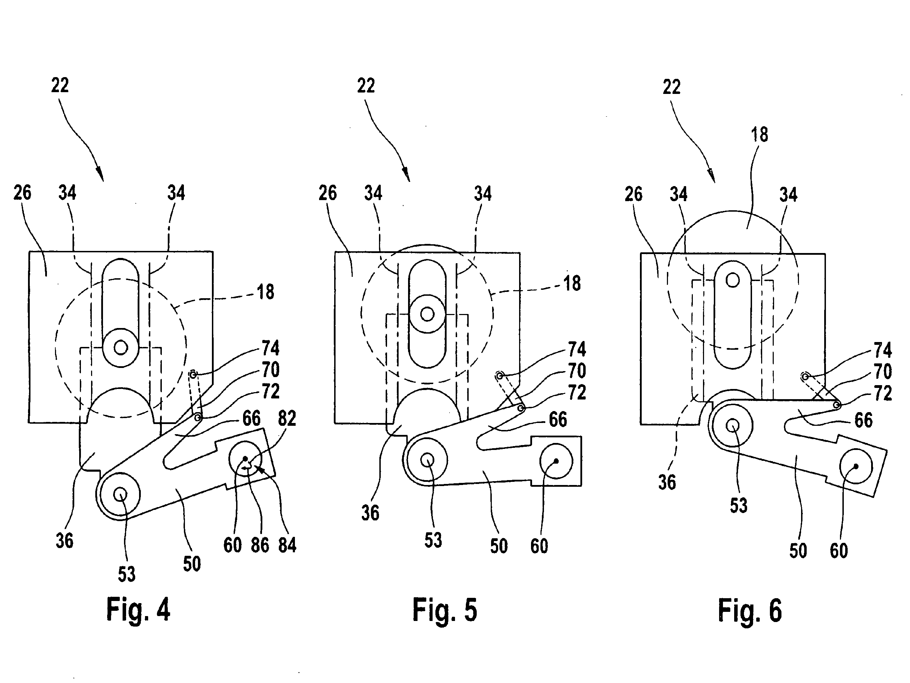

Die Kinematik bei einem Verfahren des Schlittens 36 aus seiner extremen unteren Position in seine extreme obere Position wird nun unter Bezugnahme auf die Figuren 4 bis 6 erläutert: In Figur 4 befindet sich der Schlitten 36 mit dem daran befestigten Sägeblatt 18 in seiner extremen unteren Position. Der Gelenkarm 70 steht beinahe vertikal. Wird nun mittels eines in den Figuren nicht dargestellten Aktors der Schlitten 36 längs der Linearführungen 34 nach oben verfahren, schwenkt der Gelenkarm 70 um die Schwenkachse 74 nach außen.

Die Längsachse des Antriebsmotors 60 bewegt sich längs eines ersten Abschnittes 82 einer Polkurve 84 (vergleiche Figur 4) nach außen und unten von der in Figur 4 in die in Figur 5 gezeigte Lage. Bei einer weiteren Aufwärtsbewegung des Schlittens 36 bis in die in Figur 6 gezeigte obere Extremstellung schwenkt der Gelenkarm 70 weiter nach außen, bis die Schwenkachse 72 nur noch wenig oberhalb der Drehbeziehungsweise Schwenkachse 53 liegt. Die Längsachse 60 des Antriebsmotors 58 bewegt sich nun längs eines zweiten Abschnittes 86 der Polkurve 84 im Wesentlichen horizontal und nach innen. Man erkennt aus der Darstellung von Figur 4, dass die Polkurve 84 äußerst kurz ist, die Bewegung des Antriebsmotors 58 bei einer Verfahrbewegung des Schlittens 36 also minimal ist.

## Patentansprüche

1. Plattenbearbeitungsanlage(10), mit einem Werkzeugwagen (22) mit einem Basisteil (26), an dem ein Schlitten (36) vertikal verfahrbar gehalten ist, mit einem an dem Schlitten (36) drehbar befestigten Werkzeug (18), und mit einem mit dem Schlitten (36) verbundenen Antriebsmotor (58) für das Werkzeug (18), **dadurch gekennzeichnet, dass**
a. der Antriebsmotor (58) an einer Schwinge (50) gehalten ist, die gelenkig an dem Schlitten (36) befestigt ist,
b. ein Getriebeelement (48), welches den Antriebsmotor (58) mit dem Werkzeug (18) koppelt, längs der Schwinge (50) verläuft, und
c. ein Gelenkarm (70) einerseits mit der Schwinge (50) und andererseits mit dem Basisteil (26) gelenkig verbunden ist.

2. Plattenbearbeitungsanlage (10) nach Anspruch 1, **dadurch gekennzeichnet, dass** die Schwinge (50) einen mit ihr starr verbundenen Befestigungsarm (66) umfasst, an dem der Gelenkarm (70) angreift.

3. Plattenbearbeitungsanlage (10) nach einem der Ansprüche 1 oder 2, **dadurch gekennzeichnet, dass** das Werkzeug ein Sägeblatt (18) ist.

4. Plattenbearbeitungsanlage (10) nach einem der vorhergehenden Ansprüche, **dadurch gekennzeichnet, dass** das Getriebeelement (48) einen Riemen, vorzugsweise einen Zahnriemen umfasst, und dass die Drehachse (53) einer Umlenkrolle (46) des Riemens (48) am Schlitten (36) mit der Schwenkachse (53) der Schwinge (50) am Schlitten (36) koaxial ist.

5. Plattenbearbeitungsanlage (10) nach einem der vorhergehenden Ansprüche, **dadurch gekennzeichnet, dass** der Gelenkarm (70) auf der anderen Seite des Werkzeugwagens (22) als die Schwinge (50) angeordnet ist.

6. Plattenbearbeitungsanlage (10) nach einem der vorhergehenden Ansprüche, **dadurch gekennzeichnet, dass** der Schwerpunkt (78) der aus Antriebsmotor (58) und Schwinge (50) gebildeten Einheit wenigstens in etwa in einer Mittelebene des Werkzeugwagens (22) liegt.

7. Plattenbearbeitungsanlage (10) nach einem der vorhergehenden Ansprüche, **dadurch gekennzeichnet, dass** eine Schwenkachse (72) des Gelenkarms (70) an der Schwinge (50) zwischen einer gedachten vertikalen Linie (76), die durch den Schwerpunkt (78) der durch die Schwinge (50) und den Antriebsmotor (58) gebildeten Einheit geht, und einer gedachten vertikalen Linie (80), die durch die Schwenkachse (53) der Schwinge (50) am Schlitten (36) geht, liegt.

8. Plattenbearbeitungsanlage (10) nach einem der vorhergehenden Ansprüche, **dadurch gekennzeichnet, dass** die Position der Gelenkachse (74) des Gelenkarms (70) am Basisteil (26) so gewählt ist, dass die Bewegung des Antriebsmotors (58) bei einer Verfahrbewegung des Schlittens (36) minimal ist.

9. Plattenbearbeitungsanlage (10) nach Anspruch 8, **dadurch gekennzeichnet, dass** bei einer Aufwärtsbewegung des Schlittens (50) der Antriebsmotor (58) eine Polkurve (84) beschreibt, die sich im Wesentlichen aus zwei ungefähr linearen Bewegungen zusammensetzt, wobei die erste Bewegung (82) nach außen und unten und die zweite Bewegung (86) im Wesentlichen horizontal und nach innen verläuft.

## Claims

1. A panel machining device (10), having a tool carriage (22) with a base element (26), on which a carriage (36) is maintained in a vertically displaceable manner, having a tool (18), which is rotatably fastened on the carriage (36), and having a drive motor (58) for the tool (18), which is connected with the carriage (36), **characterized in that**
a. the drive motor (58) is maintained on a rocker (50), which is hingedly fastened on the carriage (36),
b. a gear element (48), which connects the drive motor (58) with the tool (18), extends along the rocker (50), and
c. a hinged arm (70) is hingedly connected on the one end to the rocker (50) and at the other end to the base element (26).

2. The panel machining device (10) in accordance with claim 1, **characterized in that** the rocker (50) is comprised of a fastening arm (66), which is rigidly fastened to it and which is engaged by the hinged arm (70).

3. The panel machining device (10) in accordance with one of claims 1 or 2, **characterized in that** the tool is a saw blade (18).

4. The panel machining device (10) in accordance with one of the preceding claims, **characterized in that** the gear element (48) is comprised of a belt, preferably a toothed belt, and that the axis of rotation (53) of a reversing roller (46) of the belt (48) on the carriage (36) is coaxial with the pivot shaft (53) of the rocker (50) at the carriage (36).

5. The panel machining device (10) in accordance with one of the preceding claims, **characterized in that** the hinged arm (70) is arranged on the other side of the tool carriage (22) than the rocker (50).

6. The panel machining device (10) in accordance with one of the preceding claims, **characterized in that** the center of gravity (78) of the unit comprised of the drive motor (58) and the rocker (50) is located at least approximately in a center plane of the tool carriage (22).

7. The panel machining device (10) in accordance with one of the preceding claims, **characterized in that** a pivot axis (72) of the hinged arm (70) is located on the rocker (50) between an imagined vertical line (76) extending through the center of gravity (78) of the unit comprised of the drive motor (58) and the rocker (50) and an imagined vertical line (80) extending through the pivot shaft (53) of the rocker at the carriage (36).

8. The panel machining device (10) in accordance with one of the preceding claims, **characterized in that** the position of the pivot axis (74) of the hinged arm (70) on the base element (26) has been selected in such a way that the movement of the drive motor (58) in the course of a displacement movement of the carriage (36) is minimal.

9. The panel machining device (10) in accordance with claim 8, **characterized in that** in the course of an upward movement of the carriage (50) the drive motor (58) describes a pole curve (84), which is substantially composed of two approximately linear movements, of which the first movement (82) extends toward the outside and downward, and the second movement substantially horizontally and toward the inside.

## Revendications

1. Installation d'usinage de panneaux (10), comportant un chariot porte-outil (12) avec une partie de base (26), sur laquelle un chariot (36) est maintenu mobile verticalement, comportant un outil (18), fixé de manière rotative sur le chariot (36), et comportant un moteur d'entraînement (58), relié au chariot (36) et destiné à l'outil (18), **caractérisée en ce que**
a. le moteur d'entraînement (58) est fixé sur une aile (50), qui est fixée de manière articulée sur le chariot (36),
b. un élément d'engrenage (48), par lequel le moteur d'entraînement (58) est couplé à l'outil (18), s'étend le long de l'aile (50), et
c. un bras articulé (70) est relié de manière articulée, d'une part, à l'aile (50) et, d'autre part, à la partie de base (26).

2. Installation d'usinage de panneaux (10) selon la revendication 1, **caractérisée en ce que** l'aile (50) comporte un bras de fixation (66), qui est relié de manière rigide à celle-ci et qui entre en prise avec le bras articulé (70).

3. Installation d'usinage de panneaux (10) selon la revendication 1 ou 2, **caractérisée en ce que** l'outil est une lame de scie circulaire (18).

4. Installation d'usinage de panneaux (10) selon l'une quelconque des revendications précédentes, **caractérisée en ce que** l'élément d'engrenage (48) comporte une courroie, de préférence une courroie dentée, et **en ce que** l'axe de rotation (53) d'une poulie (46) de la courroie (48) sur le chariot (36) est coaxial à l'axe de pivotement (53) de l'aile (50) sur le chariot (36).

5. Installation d'usinage de panneaux (10) selon l'une quelconque des revendications précédentes, **caractérisée en ce que** le bras articulé (70) est disposé sur un autre côté du chariot porte-outil (22) que l'aile (50).

6. Installation d'usinage de panneaux (10) selon l'une quelconque des revendications précédentes, **caractérisée en ce que** le centre de gravité (78) de l'unité, formée par le moteur d'entraînement (58) et l'aile (50), est situé au moins à peu près dans un plan médian du chariot porte-outil (22).

7. Installation d'usinage de panneaux (10) selon l'une quelconque des revendications précédentes, **caractérisée en ce qu'**un axe de pivotement (72) du bras articulé (70) sur l'aile (50) se situe entre une ligne verticale (76) imaginaire, qui passe par le centre de gravité (78) de l'unité formée par le moteur d'entraînement (58) et l'aile (50), et une ligne verticale (80) imaginaire, qui passe par l'axe de pivotement (53) de l'aile (50) sur le chariot (36).

8. Installation d'usinage de panneaux (10) selon l'une quelconque des revendications précédentes, **caractérisée en ce que** la position de l'axe d'articulation (74) du bras articulé (70) sur la partie de base (26) est choisie de telle sorte que le mouvement du moteur d'entraînement (58) est minime lors d'un déplacement du chariot (36).

9. Installation d'usinage de panneaux (10) selon la revendication 8, **caractérisée en ce que,** lorsque le chariot (50) effectue un mouvement vers le haut, le moteur d'entraînement (58) décrit une courbe polaire (84), qui est composée sensiblement par deux mouvements à peu près linéaires, le premier mouvement (82) s'effectuant vers l'extérieur et le bas, et le deuxième mouvement (86) s'effectuant sensiblement horizontalement et vers l'intérieur.
